# DEMANDE DE BREVET EUROPEEN

(11) **EP 4 803 867 A1**
(43) Date de publication de la demande: **09.09.2026**
(21) Numéro de dépôt: 26161572.8
(22) Date de dépôt: 02.03.2026
(51) Int. Cl.: G01J 3/02, G01J 3/46

(54) **SYSTÈME ET PROCÉDÉ DE RÉCUPÉRATION ET D'ENREGISTREMENT DE DONNÉES COLORIMÉTRIQUES POUR LA FORMULATION DE PEINTURES**

(30) Priorité: 03.03.2025 FR 2502142
(71) Demandeur: Digikrom, 37700 Saint-Pierre-des-Corps (FR)
(72) Inventeur: DUBRULLE, Frédéric, 59650 Villeneuve-d'Ascq (FR); MALAISE, Mickaël, 15100 Saint-Flour France (FR)
(74) Mandataire: Delaveau, Sophie

(57) **Abrégé**

L'invention porte principalement sur un système de récupération et d'enregistrement de données colorimétriques (1) pour la formulation de peintures comprenant au moins un spectrophotomètre (2), des moyens informatiques (3) reliés au spectrophotomètre (2) et comportant des moyens de communication (4) avec ledit spectrophotomètre (2), caractérisé en ce que les moyens informatiques (3) sont configurés pour :
- récupérer au moins une première donnée colorimétrique provenant d'une source locale, typiquement un spectrophotomètre (2) ;
- récupérer au moins une seconde donnée colorimétrique provenant d'un service distant en réseau, disponible par exemple sur Internet (6 - 9) ;
- comparer des informations correspondant aux premier et second en-têtes et, si le second en-tête est différent du premier en-tête, modifier le second en-tête pour le rendre compatible au protocole de communication entre le spectrophotomètre (2) et les moyens informatiques (3).

## Description

### DOMAINE TECHNIQUE DE L'INVENTION

Le domaine technique de l'invention est celui des systèmes d'acquisition de données colorimétriques pour réaliser des formulations de peintures, et en particulier des formulations de peintures de carrosserie dans le domaine automobile.

### ARRIERE-PLAN TECHNOLOGIQUE DE L'INVENTION

Pour réaliser des teintes de carrosserie reproductibles, ce qui est particulièrement nécessaire lorsque des retouches de peinture sont à réaliser, sont connus des dispositifs comprenant un spectrophotomètre relié à des moyens informatiques - typiquement un ordinateur - sur lesquels est installé un logiciel de contrôle du spectrophotomètre afin que ce dernier réalise l'acquisition de données colorimétriques à partir d'échantillons physiques.

Les spectrophotomètres sont généralement reliés de manière filaire - typiquement via une liaison de type USB (Universal Serial Bus) - aux moyens informatiques, si bien que le fonctionnement d'un tel dispositif demeure local, et contraint l'utilisateur à disposer d'un grand nombre d'échantillons et, bien souvent, d'un laboratoire lui permettant de réaliser les teintes.

Par ailleurs, il est nécessaire de réaliser une acquisition de données à chaque fois qu'une formulation de peinture doit être réalisée, causant des problématiques de reproductibilité des mesures. Il en résulte un risque d'absence d'uniformité de la teinte entre deux acquisitions de données par le spectrophotomètre.

Enfin, le protocole de communication entre l'ordinateur et le spectrophotomètre est propre au modèle dudit spectrophotomètre. Il existe donc une problématique liée à l'universalité des données colorimétriques acquises par un spectrophotomètre déterminé.

Dans ce contexte, l'invention vise un système d'acquisition de données colorimétriques pour la réalisation de formulations de peinture qui pallie les inconvénients précités en rendant l'acquisition de données colorimétriques reproductible et universelle.

### RESUME DE L'INVENTION

A cet effet, l'invention concerne un système de récupération de données colorimétriques pour la formulation de peintures comprenant au moins un spectrophotomètre, des moyens informatiques reliés au spectrophotomètre et comportant des moyens de contrôle du spectromètre et des moyens de communication avec ledit spectrophotomètre selon un protocole de communication déterminé dépendant du spectrophotomètre, lesquels moyens informatiques sont configurés pour :
- Récupérer au moins une première donnée colorimétrique préalablement acquise par le spectrophotomètre, laquelle donnée est construite selon une première trame déterminée comprenant au moins un premier en-tête correspondant au protocole de communication entre le spectrophotomètre et les moyens informatiques, et un premier bloc d'informations comprenant au moins une première information colorimétrique brute,
- Récupérer au moins une seconde donnée colorimétrique provenant d'une mémoire cache des moyens informatiques, laquelle seconde donnée est construite selon une seconde trame déterminée comprenant au moins un second en-tête et un second bloc d'informations comprenant au moins une seconde information colorimétrique brute,
- Extraire des informations des premier et second en-têtes et enregistrer lesdites informations dans l'espace de stockage desdits moyens informatiques,
- Comparer les informations relatives aux premier et second en-têtes et, si le second en-tête est différent du premier en-tête, modifier le second en-tête pour le rendre compatible au protocole de communication entre le spectrophotomètre et les moyens informatiques,
- Retourner vers les moyens de contrôle du spectromètre les première et seconde données colorimétriques

Le système de l'invention peut également comporter les caractéristiques optionnelles suivantes considérées isolément ou selon toutes les combinaisons techniques possibles :
- Les moyens informatiques comprennent des seconds moyens de communication avec un serveur distant, et en ce que les moyens informatiques sont configurés pour récupérer la seconde donnée colorimétrique depuis le serveur distant et pour l'enregistrer dans la mémoire cache desdits moyens informatiques.

Un autre aspect de l'invention concerne un procédé de récupération de données colorimétriques pour la formulation de peintures mis en œuvre par un système de récupération et d'enregistrement de données colorimétriques pour la formulation de peintures, comprenant au moins un spectrophotomètre, des moyens informatiques reliés au spectrophotomètre et comportant des moyens de contrôle du spectromètre et des moyens de communication avec ledit spectrophotomètre selon un protocole de communication déterminé dépendant du spectrophotomètre, lequel procédé comprend les étapes successives suivantes :
- Récupération d'au moins une première donnée colorimétrique préalablement acquise par le spectrophotomètre, laquelle première donnée est construite selon une première trame déterminée comprenant au moins un premier en-tête correspondant au protocole de communication entre le spectrophotomètre et les moyens informatiques, et un premier bloc d'informations comprenant au moins une première information colorimétrique brute ;
- Récupération d'au moins une seconde donnée colorimétrique provenant d'une mémoire cache des moyens informatiques, laquelle seconde donnée est construite selon une seconde trame déterminée comprenant au moins un second en-tête et un second bloc d'informations comprenant au moins une seconde information colorimétrique brute,
- Extraction d'informations des premier et second en-têtes et enregistrement desdites informations dans l'espace de stockage desdits moyens informatiques,
- Comparaison des informations relatives aux premier et second en-têtes et, si le second en-tête est différent du premier en-tête, modification du second en-tête pour le rendre compatible au protocole de communication entre le spectrophotomètre et les moyens informatiques, et
- Retour vers les moyens de contrôle du spectromètre des première et seconde données colorimétriques.

Le procédé de l'invention peut également comporter les caractéristiques optionnelles suivantes considérées isolément ou selon toutes les combinaisons techniques possibles :
- Le procédé comprend une étape préliminaire d'acquisition d'au moins la première donnée colorimétrique par le spectrophotomètre, suivi de l'enregistrement de cette donnée dans un espace mémoire dudit spectrophotomètre.
- Le procédé comprend une étape préliminaire d'acquisition d'au moins la seconde donnée colorimétrique par un second spectrophotomètre, suivi de l'enregistrement de cette donnée dans une base de données comprise dans un espace de stockage d'informations du serveur distant.
- Les moyens informatiques comprennent des seconds moyens de communication avec un serveur distant, et en ce que le procédé comprend une étape de récupération de la seconde donnée colorimétrique depuis le serveur distant et d'enregistrement de cette seconde donnée dans la mémoire cache desdits moyens informatiques.

Un autre aspect de l'invention concerne un procédé de réalisation d'au moins une formulation de peinture mis en œuvre par un système de récupération de données colorimétriques pour la formulation de peintures, comprenant au moins un spectrophotomètre, des moyens informatiques relié au spectrophotomètre et comportant des moyens de communication avec ledit spectrophotomètre selon un protocole de communication déterminé dépendant du spectrophotomètre, les moyens informatiques comprenant en outre des moyens de contrôle du spectromètre et un espace de stockage d'informations et une mémoire cache, la formulation de peinture comprenant au moins une première donnée colorimétrique enregistrée dans un espace mémoire du spectrophotomètre et au moins une seconde donnée colorimétrique enregistrée dans la mémoire cache des moyens informatiques, laquelle première donnée colorimétrique est construite selon une première trame déterminée comprenant au moins un premier en-tête correspondant au protocole de communication entre le spectrophotomètre et les moyens informatiques, et un premier bloc d'informations comprenant au moins une première information colorimétrique brute, et laquelle seconde donnée colorimétrique est construite selon une seconde trame déterminée comprenant au moins un second en-tête et un second bloc d'informations comprenant au moins une seconde information colorimétrique brute, lequel procédé comprend les étapes successives suivantes :
- Envoi par les moyens informatiques au spectrophotomètre d'une requête de récupération de la première donnée colorimétrique ;
- Recherche par le spectrophotomètre de cette première donnée colorimétrique dans son espace mémoire, et envoi d'un signal par le spectrophotomètre comprenant la première donnée colorimétrique vers les moyens informatiques ;
- Envoi par les moyens informatiques d'une requête de récupération de la seconde donnée colorimétrique enregistrée dans la mémoire cache ;
- Récupération de la seconde donnée colorimétrique par les moyens informatiques ;
- Extraction d'informations des premier et second en-têtes et enregistrement desdites informations dans l'espace de stockage desdits moyens informatiques ;
- Comparaison des informations relatives aux premier et second en-têtes des première et seconde données colorimétriques respectives et, si le second en-tête est différent du premier en-tête, modification du second en-tête du bloc de données de la seconde donnée colorimétrique pour le rendre compatible au protocole de communication entre le spectrophotomètre et les moyens informatiques ;
- Modification du signal du spectrophotomètre pour que ce dernier intègre la seconde donnée colorimétrique ;
- Retour du signal modifié du spectrophotomètre vers les moyens de contrôle du spectromètre, lequel signal intègre les première et seconde données colorimétriques pour former la formulation de peinture.

Le procédé de l'invention peut également comporter les caractéristiques optionnelles suivantes considérées isolément ou selon toutes les combinaisons techniques possibles :
- Le procédé comprend une étape préliminaire d'acquisition d'au moins la première donnée colorimétrique par le spectrophotomètre, suivi de l'enregistrement de cette donnée dans l'espace mémoire dudit spectrophotomètre.
- Les moyens informatiques comprennent des seconds moyens de communication avec un serveur distant, et en ce que le procédé comprend une étape de récupération de la seconde donnée colorimétrique depuis le serveur distant et d'enregistrement de cette seconde donnée dans la mémoire cache desdits moyens informatiques.

L'invention et ses différentes applications seront mieux comprises à la lecture de la description qui suit et à l'examen des figures qui l'accompagnent.

### BREVE DESCRIPTION DES FIGURES

D'autres caractéristiques et avantages de l'invention ressortiront à la lecture de la description qui suit, en référence à la figure annexée, qui illustre :

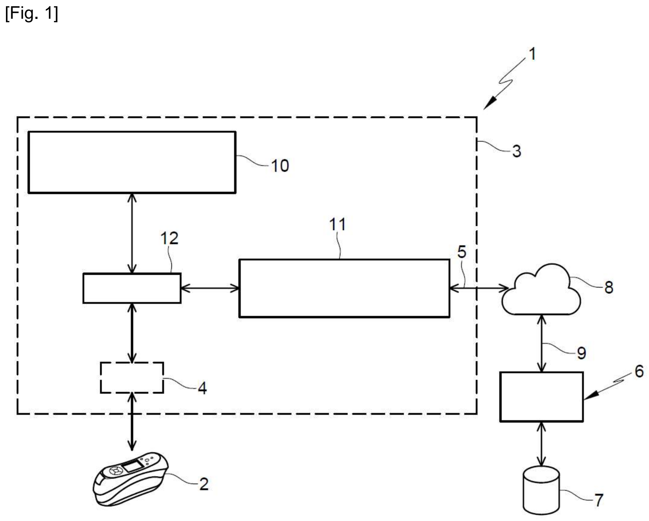

[Fig. 1] La figure 1 est une représentation schématique du système de l'invention.

### DESCRIPTION DETAILLEE

Il est précisé que la figure représente un mode de réalisation de l'invention mais qu'il peut exister d'autres modes de réalisation qui répondent à la définition de l'invention.

La présente invention porte principalement sur un système de récupération et d'enregistrement de données colorimétriques 1, en vue d'assurer la formulation reproductible de peintures, et notamment des peintures de carrosserie pour l'industrie automobile.

En référence à la figure 1, le système 1 de l'invention comprend des moyens informatiques 3, en particulier un micro-ordinateur ou tout autre type de dispositif informatique local connu, comprenant au moins un microprocesseur muni d'une ou plusieurs mémoires cache ou antémémoires, un moyen de stockage d'information type disque dur, des premiers moyens de communication locale 4 - par exemple filaire de type USB (Universal Serial Bus), ou sans fil de type Wifi ou Bluetooth, et des seconds moyens de communication 5 à un serveur distant 6, par exemple via une connexion à un réseau distant 8 (typiquement internet, mais possiblement intranet). Dans la suite de la description, on nommera ces moyens informatiques 3 « ordinateur local ».

Le système de récupération et d'enregistrement 1 comprend en outre au moins un spectrophotomètre 2 relié à l'ordinateur local 3, préférentiellement via un câble USB bien qu'une liaison sans fil soit également possible. Le spectrophotomètre 2 permet d'acquérir des premières données colorimétriques construites selon une trame déterminée, et de les enregistrer dans un espace de stockage mémoire dudit spectrophotomètre 2.

La trame des premières données colorimétriques comprend un premier en-tête et un premier bloc d'informations. Le bloc d'informations comprend les informations colorimétriques brutes associées à un échantillon préalablement analysé par le spectrophotomètre 2. Le premier en-tête correspond quant à lui au protocole de communication entre l'ordinateur local 3 et le spectrophotomètre 2. Cet en-tête dépend donc du type de connexion entre les deux appareils 2, 3, mais également du type de spectrophotomètre 2 utilisé.

Le serveur distant 6 comprend des moyens de communication 9 à un réseau étendu, et comprend classiquement un processeur et un espace de stockage 7 dans lequel est enregistrée une base de données comportant des secondes données colorimétriques. Ces secondes données colorimétriques ont par exemple été acquises par un second spectrophotomètre (non représenté) relié au serveur distant 6, puis enregistrées dans l'espace de stockage 7 dudit serveur distant 6.

Les secondes données colorimétriques sont également construites selon une trame déterminée. La trame des secondes données colorimétriques comprend un second en-tête et un second bloc d'informations. Le second bloc d'informations comprend les informations colorimétriques brutes. Le second en-tête comprend quant à lui une information relative au protocole de communication entre le serveur distant 6 et le second spectrophotomètre. A l'instar de la trame des premières données colorimétriques, ce second en-tête dépend donc du type de connexion entre les deux appareils, mais également du type de spectrophotomètre utilisé. En d'autres termes, le premier en-tête des première données colorimétriques enregistrées dans l'espace de stockage de l'ordinateur local 3 et le second en-tête des secondes données colorimétriques enregistrées dans l'espace de stockage 7 du serveur distant 6 peuvent être différents.

A titre d'exemple non limitatif, le second en-tête comprend une information numérique relative au rang de traitement de la donnée dans le cadre d'un protocole de communication USB.

L'ordinateur local 3 comprend un système d'exploitation sur lequel est installé une pluralité de logiciels, et en particulier un logiciel de contrôle 10 du spectrophotomètre 2, lequel logiciel 10 permet notamment de piloter le spectrophotomètre 2 afin que ce dernier réalise l'acquisition des premières données colorimétriques sur la base d'échantillons physiques connus. Ces premières données colorimétriques sont alors enregistrées dans l'espace mémoire du spectrophotomètre 2, et peuvent également être envoyées vers l'ordinateur local 3 et enregistrés dans l'espace de stockage dudit ordinateur local 3, en fonction de la commande envoyée par l'ordinateur local 3 vers ledit spectrophotomètre 2.

Deux composants logiciel tiers sont également installés dans l'espace de stockage de l'ordinateur local. Le premier composant logiciel 11 est du type application ou service, et est exécuté en tâche de fond. Ce service 11 est configuré pour récupérer les secondes données colorimétriques enregistrées sur le serveur distant 6 en communication avec l'ordinateur local 3. Le second composant logiciel est un pilote 12 - ou driver - dont la fonction est de communiquer avec le logiciel de contrôle 10 du spectrophotomètre 2 et le service exécuté en tache de fond 11.

Un procédé de récupération et d'enregistrement de données colorimétriques pour la formulation de peintures, mis en œuvre par le système de récupération et d'enregistrement de données colorimétriques 1 va maintenant être décrit.

Au cours d'une première étape, l'ordinateur local 3 envoie une commande au spectrophotomètre 2 pour récupérer au moins une première donnée colorimétrique préalablement acquise par le spectrophotomètre 2 et enregistrée dans l'espace mémoire dudit spectrophotomètre 2. Une fois la ou les premières données colorimétriques récupérées, le logiciel de contrôle 10 les enregistre dans l'espace de stockage d'informations de l'ordinateur local 3. De manière optionnelle, le procédé comprend une étape préliminaire d'acquisition par le spectrophotomètre 2 d'au moins la première donnée colorimétrique par ledit spectrophotomètre 2, suivi de l'enregistrement de cette donnée dans l'espace mémoire dudit spectrophotomètre 2.

Au cours d'une seconde étape, le logiciel de contrôle 10 commande la récupération d'au moins une seconde donnée colorimétrique provenant de la mémoire cache dudit ordinateur local 3, puis commande l'enregistrement de cette seconde donnée dans l'espace de stockage dudit ordinateur local 3.

De manière optionnelle, si aucune seconde donnée colorimétrique n'est présente dans la mémoire cache de l'ordinateur local 3, un utilisateur effectue une opération de sélection - en utilisant l'ordinateur local 3 - d'une ou plusieurs secondes données colorimétriques disponibles sur le serveur distant 6, via les seconds moyens de communication 5. Cette sélection est mise en mémoire cache dans le service 11 exécuté en tâche de fond sur l'ordinateur local 3. Bien entendu et comme décrit ci-dessus, le procédé peut comprendre une étape préalable d'acquisition d'au moins la seconde donnée colorimétrique par le second spectrophotomètre 2, suivi de l'enregistrement de cette donnée dans la base de données comprise dans l'espace de stockage d'informations 7 du serveur distant 6.

Au cours d'une troisième étape, le pilote 12 exécuté sur l'ordinateur local 3 extrait des informations relatives aux premier et second en-têtes des données colorimétriques considérées. A titre d'exemple non limitatif, cette information peut être une information numérique correspondant au rang de traitement de la donnée dans le cadre d'un protocole de communication USB.

Enfin, au cours d'une quatrième étape du procédé, le pilote 12 exécuté sur l'ordinateur local 3 compare les informations associées aux premier et second en-têtes et, si le second en-tête est différent du premier en-tête, alors le pilote 12 modifie le second en-tête pour le rendre identique au premier en-tête et de fait compatible au protocole de communication entre le spectrophotomètre 2 et le logiciel de contrôle 10 de l'ordinateur local 3. Les première et seconde données colorimétriques sont alors retournées vers le logiciel de contrôle 10 du spectromètre 2.

A titre d'exemple et de manière non limitative, lorsque les premier et second en-têtes comprennent un nombre entier correspondant au rang de traitement de la donnée dans le cadre d'un protocole de communication USB, alors le pilote 12 modifie si nécessaire le rang du second en-tête de la seconde donnée colorimétrique pour que cette dernière soit analysée à la suite de la ou des premières données colorimétriques.

Le procédé de récupération de données colorimétriques de l'invention permet donc de s'affranchir de l'unique acquisition de données par un spectrophotomètre 2 relié à l'ordinateur local 3, et permet de bénéficier d'une plus grande quantité de données colorimétriques. Par ailleurs, le procédé permet de s'affranchir de trop nombreuses mesures et améliore de fait la reproductibilité et l'uniformité des données récupérées.

Le système 1 de l'invention permet également de mettre en œuvre un procédé de réalisation d'au moins une formulation de peinture, qui va maintenant être décrit.

Ce procédé permet de réaliser une formulation de peinture à partir de données colorimétriques déterminées, cette formulation comprenant au moins une première donnée colorimétrique et au moins une seconde donnée colorimétrique. Plus précisément, les données colorimétriques déterminées proviennent soit d'une première source de données colorimétriques issues d'un spectrophotomètre 2, soit d'une seconde source de données colorimétriques enregistrées dans le cache du service exécuté en tâche de fond 11 sur l'ordinateur local 3. Ces données colorimétriques provenant de la seconde source sont récupérées en amont et enregistrées dans le cache du service exécuté en tache de fond 11 depuis un serveur distant 6, après une sélection de l'utilisateur.

Au cours d'une première étape, le logiciel de contrôle 10 envoie une requête au spectrophotomètre 2 pour récupérer la ou les premières données colorimétriques.

Au cours d'une seconde étape, le spectrophotomètre 2 ayant reçu cette requête recherche la ou les premières données colorimétriques requises et enregistrées dans son espace mémoire, puis envoie en réponse au logiciel de contrôle 10 un signal comprenant la ou les premières données colorimétriques intercepté par le pilote 12 de l'ordinateur local 3.

Bien entendu, si aucune donnée n'est enregistrée dans l'espace mémoire du spectrophotomètre 2, le procédé comprend une étape préliminaire d'acquisition d'au moins la première donnée colorimétrique par le spectrophotomètre 2, suivi de l'enregistrement de cette donnée dans l'espace mémoire dudit spectrophotomètre 2.

Au cours d'une troisième étape, le logiciel de contrôle 10 du spectrophotomètre 2 demande la seconde donnée colorimétrique enregistrée dans le cache du service exécuté en tache de fond 11, cette demande est alors interceptée par le pilote 12 de l'ordinateur local 3.

Au cours d'une quatrième étape le pilote 12 de l'ordinateur local 3 interroge le service exécuté en tâche de fond 11 sur l'ordinateur local 3 en envoyant une requête de récupération de la ou des secondes données
colorimétriques enregistrées dans la mémoire cache de ce service 11.

Ainsi la ou les secondes données colorimétriques, qui sont à l'origine enregistrées sur le serveur distant 6, et qui ont été sélectionnées par l'utilisateur pour être copiée dans la mémoire cache du service 11 de l'ordinateur local 3, sont copiées en réponse vers le pilote 12 de l'ordinateur local 3.

Au cours de la cinquième étape, l'ordinateur local 3 extrait les informations contenues dans les premier et second en-têtes des première et seconde données colorimétrique, puis compare lesdits premier et second en-têtes des première et seconde données colorimétriques respectives.

Si le second en-tête est différent du premier en-tête, alors l'ordinateur local 3 modifie le second en-tête pour le rendre identique au premier en-tête et donc compatible au protocole de communication entre le spectrophotomètre 2 et ledit ordinateur local 3.

Au cours de la sixième étape, le pilote 12 de l'ordinateur local 3 retourne en réponse au signal du logiciel de contrôle 10 la ou les secondes données colorimétriques avec en-têtes modifiés, en plus de la ou des premières données colorimétriques provenant du spectrophotomètre 2.

Ce procédé permet ainsi de récupérer différentes donnés colorimétriques provenant soit du spectrophotomètre 2 relié à l'ordinateur local, soit provenant de la mémoire cache du service 11 qui tourne en tâche de fond de l'ordinateur local 3 provenant du serveur distant 6, puis de modifier le signal final afin que ce dernier soit interprété par le logiciel de contrôle 10 du spectrophotomètre 2 comme provenant intégralement dudit spectrophotomètre 2. Ceci permet de s'affranchir des contraintes matérielles imposées par le fabricant du spectrophotomètre 2.

Il pourrait même être envisagé que la formulation de peinture utilise uniquement des secondes données colorimétriques provenant de la mémoire cache du service 11 qui tourne en tâche de fond de l'ordinateur local 3 et/ou copiées au préalable après sélection par une opération d'un utilisateur de depuis l'espace de stockage 7 du serveur distant 6, et que ces données soit intégrées dans un signal modifié pour être interprété par le logiciel de contrôle 10 du spectrophotomètre 2 comme provenant intégralement de l'espace mémoire dudit spectrophotomètre 2.

## Revendications

1. Système de récupération de données colorimétriques (1) pour la formulation de peintures comprenant au moins un spectrophotomètre (2), des moyens informatiques (3) reliés au spectrophotomètre (2) et comportant des moyens de contrôle (10) du spectromètre (2) et des moyens de communication (4) avec ledit spectrophotomètre (2) selon un protocole de communication déterminé dépendant du spectrophotomètre (2), **caractérisé en ce que** les moyens informatiques (3) sont configurés pour :
- récupérer au moins une première donnée colorimétrique préalablement acquise par le spectrophotomètre (2) , laquelle donnée est construite selon une première trame déterminée comprenant au moins un premier en-tête correspondant au protocole de communication entre le spectrophotomètre (2) et les moyens informatiques (3), et un premier bloc d'informations comprenant au moins une première information colorimétrique brute ;
- récupérer au moins une seconde donnée colorimétrique provenant d'une mémoire cache (11) des moyens informatiques (3), laquelle seconde donnée est construite selon une seconde trame déterminée comprenant au moins un second en-tête et un second bloc d'informations comprenant au moins une seconde information colorimétrique brute ;
- extraire des informations des premier et second en-têtes et enregistrer lesdites informations dans un espace de stockage des moyens informatiques (3),
- comparer les informations des premier et second en-têtes et, si le second en-tête est différent du premier en-tête, modifier le second en-tête pour le rendre compatible au protocole de communication entre le spectrophotomètre (2) et les moyens informatiques (3), et
- Retourner vers les moyens de contrôle (10) du spectromètre (2) les première et seconde données colorimétriques.

2. Système (1) selon la revendication précédente, **caractérisé en ce que** les moyens informatiques (3) comprennent des seconds moyens de communication (5) avec un serveur distant (6), et **en ce que** les moyens informatiques (3) sont configurés pour récupérer la seconde donnée colorimétrique depuis le serveur distant (6) et pour l'enregistrer dans la mémoire cache (11) desdits moyens informatiques (3).

3. Procédé de récupération de données colorimétriques pour la formulation de peintures mis en œuvre par un système de récupération et d'enregistrement de données colorimétriques (1) pour la formulation de peintures, comprenant au moins un spectrophotomètre (2), des moyens informatiques (3) reliés au spectrophotomètre (2) et comportant des moyens de contrôle (10) du spectromètre (2) et des moyens de communication (4) avec ledit spectrophotomètre (2) selon un protocole de communication déterminé dépendant du spectrophotomètre (2), **caractérisé en ce que** le procédé comprend les étapes successives suivantes :
- Récupération d'au moins une première donnée colorimétrique préalablement acquise par le spectrophotomètre (2), laquelle première donnée est construite selon une première trame déterminée comprenant au moins un premier en-tête correspondant au protocole de communication entre le spectrophotomètre (2) et les moyens informatiques (3), et un premier bloc d'informations comprenant au moins une première information colorimétrique brute ;
- Récupération d'au moins une seconde donnée colorimétrique provenant d'une mémoire cache (11) des moyens informatiques (3), laquelle seconde donnée est construite selon une seconde trame déterminée comprenant au moins un second en-tête et un second bloc d'informations comprenant au moins une seconde information colorimétrique brute ;
- Extraction des informations des premier et second en-têtes et enregistrement desdites informations dans un espace de stockage des moyens informatiques (3), et
- Comparaison des informations des premier et second en-têtes et, si le second en-tête est différent du premier en-tête, modification du second en-tête pour le rendre compatible au protocole de communication entre le spectrophotomètre (2) et les moyens informatiques (3), et
- Retour vers les moyens de contrôle (10) du spectromètre (2) des première et seconde données colorimétriques.

4. Procédé selon la revendication précédente, **caractérisé en ce qu'**il comprend une étape préliminaire d'acquisition d'au moins la première donnée colorimétrique par le spectrophotomètre (2), suivi de l'enregistrement de cette donnée dans un espace mémoire dudit spectrophotomètre (2).

5. Procédé selon la revendication 3 ou 4, **caractérisé en ce qu'**il comprend une étape préliminaire d'acquisition d'au moins la seconde donnée colorimétrique par un second spectrophotomètre, suivi de l'enregistrement de cette donnée dans une base de données comprise dans un espace de stockage d'informations (7) du serveur distant (6).

6. Procédé selon l'une quelconques des revendications 3 à 5, **caractérisé en ce que** les moyens informatiques (3) comprennent des seconds moyens de communication (5) avec un serveur distant (6), et **en ce que** le procédé comprend une étape de récupération de la seconde donnée colorimétrique depuis le serveur distant (6) et d'enregistrement de cette seconde donnée dans la mémoire cache (11) desdits moyens informatiques (3).

7. Procédé de réalisation d'au moins une formulation de peinture mis en œuvre par un système de récupération de données colorimétriques (1) pour la formulation de peintures, comprenant au moins un spectrophotomètre (2), des moyens informatiques (3) reliés au spectrophotomètre et comportant des moyens de communication (4) avec ledit spectrophotomètre (2) selon un protocole de communication déterminé dépendant du spectrophotomètre (2), les moyens informatiques (3) comprenant en outre des moyens de contrôle (10) du spectromètre (2) et un espace de stockage d'informations et une mémoire cache (11), la formulation de peinture comprenant au moins une première donnée colorimétrique enregistrée dans un espace mémoire du spectrophotomètre (2) et au moins une seconde donnée colorimétrique enregistrée dans la mémoire cache (11) des moyens informatiques (3), laquelle première donnée colorimétrique est construite selon une première trame déterminée comprenant au moins un premier en-tête correspondant au protocole de communication entre le spectrophotomètre (2) et les moyens informatiques (3), et un premier bloc d'informations comprenant au moins une première information colorimétrique brute, et laquelle seconde donnée colorimétrique est construite selon une seconde trame déterminée comprenant au moins un second en-tête et un second bloc d'informations comprenant au moins une seconde information colorimétrique brute, **caractérisé en ce que** le procédé comprend les étapes successives suivantes :
- Envoi par les moyens informatiques (3) et par le logiciel de contrôle (10) au spectrophotomètre (2) d'une requête de récupération de la première donnée colorimétrique ;
- Recherche par le spectrophotomètre (2) de cette première donnée colorimétrique dans son espace mémoire, et envoi d'un signal par le spectrophotomètre (2) comprenant la première donnée colorimétrique vers les moyens informatiques (3) ;
- Envoi par les moyens informatiques (3) d'une requête de récupération de la seconde donnée colorimétrique enregistrée dans la mémoire cache (11) ;
- Récupération de la seconde donnée colorimétrique par les moyens informatiques (3) depuis la mémoire cache (11) ;
- Extraction des informations des premier et second en-têtes et enregistrer lesdites informations dans un espace de stockage des moyens informatiques (3) ;
- Comparaison des informations des premier et second en-têtes des première et seconde données colorimétriques respectives et, si le second en-tête est différent du premier en-tête, modification du second en-tête pour le rendre compatible au protocole de communication entre le spectrophotomètre (2) et les moyens informatiques (3) ;
- Modification du signal du spectrophotomètre (2) pour que ce dernier intègre la seconde donnée colorimétrique, et ;
- Retour du signal modifié du spectrophotomètre (2) vers les moyens de contrôle (10) du spectromètre (2), lequel signal intègre les première et seconde données colorimétriques pour former la formulation de peinture.

8. Procédé selon la revendication précédente, **caractérisé en ce qu'**il comprend une étape préliminaire d'acquisition d'au moins la première donnée colorimétrique par le spectrophotomètre (2), suivi de l'enregistrement de cette donnée dans l'espace mémoire dudit spectrophotomètre (2).

9. Procédé selon la revendication 7 ou 8, **caractérisé en ce que** les moyens informatiques (3) comprennent des seconds moyens de communication (5) avec un serveur distant (6), et **en ce que** le procédé comprend une étape de récupération de la seconde donnée colorimétrique depuis le serveur distant (6) et d'enregistrement de cette seconde donnée dans la mémoire cache **(11)** desdits moyens informatiques (3).
